# EUROPEAN PATENT APPLICATION

(11) **EP 2 131 065 A2**
(43) Date of publication of application: **09.12.2009**
(21) Application number: 09007466.7
(22) Date of filing: 05.06.2009
(51) Int. Cl.: F16H 3/12, F16H 61/682

(54) **Transmission and control method thereof**

(30) Priority: 06.06.2008 JP 2008149590
(71) Applicant: AISIN AI Co., Ltd., Nishio-shi, Aichi-ken (JP)
(72) Inventor: Tamori, Toshihiko, Nishio-shi Aichi-ken (JP)
(74) Representative: Marshall, John Grahame

(57) **Abstract**

A transmission (11, 12) includes a clutch mechanism (C, C1, C2), an input shaft (20, 21, 22), an output shaft (23), a transmission mechanism (3, 71, 72) including a plurality of gears (31-33, 35, 36, 711-714,721-724) and a synchronizing device (371-375, 381-384, 391-394) selectively synchronizing the input shaft and the gears, a gear selecting apparatus (4, 81, 82) including sleeves and at least one actuator, the sleeve selectively moving to a neutral position, to an engaged position, and to a synchronized position, the actuator actuating the sleeve to selectively move to the neutral position and the engaged position, a control means (5) controlling the clutch mechanism and the actuator, a synchronizing means (51) for controlling the actuator to select the sleeve corresponding to the selected gear and to move the sleeve to the synchronized position, and an auxiliary synchronizing means (52, 55) for controlling the corresponding actuator to move the sleeve corresponding to an auxiliary gear which is the gear different from the selected gear to the synchronized position.

## Description

### FIELD OF THE INVENTION

The present invention relates to a transmission and a control method thereof. More particularly, the present invention pertains to a transmission which includes plural actuators for actuating sleeves and a control method thereof.

### BACKGROUND

Generally, an automobile includes a transmission for converting and transmitting a power generated at an engine to a driving axle in response to a driving condition. There exist various types of transmission apparatuses such as a gear-type transmission apparatus, a belt-type transmission apparatus and the like. Generally, the gear-type transmission apparatus having less power transmission loss is applied for the automobile.

The gear-type transmission apparatus is configured to switch between plural shift gear sets, each of which establishes different shift stage, in order to output the power inputted from the engine in response to the driving condition. The transmission apparatus includes plural gear sets, each of which configure different shift stage, so that either one of the gear sets is selected and the selected shift stage is established when a shift operation is performed.

The transmission apparatus further includes synchronizing device in order to promptly and smoothly perform the shift operation (speed change) when switching the gear sets. Each of the synchronizing device synchronizes a rotation of a hub, which integrally rotates with an input shaft of the transmission apparatus, and a rotation of the selected shift gear, which rotates relative to the input shaft, in order to switch the gear sets in response to a selected speed for transmitting the rotational torque, which is generated at the engine and which is inputted into the transmission apparatus, to wheels. After the rotation of the hub and the rotation of the shift gear are synchronized, the hub and the shift gear are engaged, i.e. the selected shift stage is established, and the shift operation is completed. The synchronizing device smoothly connects the hub and the shift gear, which rotate relative to each other. However, in a case where time necessary for the hub and the shift gear to be synchronized (i.e. a synchronizing time) is increased, an entire time necessary to complete the shift operation also increases, thereby deteriorating a shift feeling. Accordingly, it is generally considered to reduce the synchronizing time by increasing a synchronization capacity of the synchronizing device. According to a device disclosed in JP2002-340170A, several positions to be shifted are set for a gearshift, which is used when a shift operation of a manual transmission apparatus is performed. More specifically, a position at which the hub is engaged with the selected gear, a synchronized position, and an engagement starting position are set for the gearshift as positions to be shifted, so that a moving speed of the gearshift at the synchronizing position and the engagement starting position are set to be slow and the moving speed of the gearshift at other positions are set to be faster. According to the device disclosed in JP2002-340170A, a transmission load generated when the hub and the shift gear start being synchronized and when the hub and the shift gear start being engaged is reduced, thereby reducing a shock generated when the gear sets are engaged in order to establish a new shift stage (i.e. the shift operation) and completing the shift operation in a relatively short time.

However, the synchronizing device may be increased in size or manufacturing costs may be increased with the foregoing known construction in which the synchronization capacity of each synchronizing device is increased. On the other hand, the device disclosed in JP2002-340170A may reduce the shock generated when shift operation is performed, however, it is not always the case that the time necessary for completing the shift operation is shortened by increasing the moving speed of the gearshift at an operation other than the synchronizing starting time and the engagement starting time.

A need thus exists to provide a transmission apparatus and a controlling method of the same which shorten a time necessary for completing a shift operation.

### SUMMARY OF THE INVENTION

In light of the foregoing, the present invention provides a transmission which includes a clutch mechanism moving to switch between a connected state where the clutch mechanism is connected to a power source and a disconnected state where the clutch mechanism is disconnected from the power source, an input shaft connected to the clutch mechanism, an output shaft, a transmission mechanism including a plurality of gears provided between the input shaft and the output shaft, the transmission mechanism including a synchronizing device selectively synchronizing a rotation speed of the input shaft and a rotation speed of the gears, a gear selecting apparatus including a plurality of sleeves respectively positioned between the corresponding gears and at least one actuator for actuating the sleeves, the sleeve selectively moving to a neutral position where the sleeve is not engaged with any of the gears, to an engaged position where the sleeve is engaged with a gear selected among the gears, and to a synchronized position where the gear and the input shaft are synchronized by the synchronizing device between the neutral position and the engaged position, the actuator actuating the sleeve to selectively move to the neutral position and to the engaged position, a control means controlling the clutch mechanism and the actuator, a synchronizing means provided at the control means for controlling the actuator to select the sleeve corresponding to the selected gear and to move the sleeve to the synchronized position so that the input shaft and the selected gear are synchronized by the synchronizing device, and an auxiliary synchronizing means provided at the control means for controlling the corresponding actuator to move the sleeve corresponding to an auxiliary gear which is the gear different from the selected gear to the synchronized position.

According to the present invention, the gear selecting apparatus includes the actuator corresponding to the sleeve and the auxiliary synchronizing means controlling the corresponding actuator to move the sleeve corresponding to the gear different from the selected gear to the synchronized position in addition to the synchronizing means selecting the sleeve corresponding to the selected gear and synchronizing the selected gear. With this construction, the synchronization is performed not only at the selected gear but also at another gear. Accordingly, the synchronization of the rotation of the input shaft is assisted, or supported by the synchronization by means of another synchronizing device corresponding to another gear in addition to the synchronization by means of the synchronizing device corresponding to the selected gear. In other words, a torque for increasing or decreasing the rotation speed of the input shaft is given by plural synchronizing devices. Thus, the rotation speed of the input shaft can be synchronized swiftly to reduce the time required for the synchronization. In consequence, the time required to synchronize gears is reduced, and an operational feeling is enhanced. Further, because the synchronization capacity of the transmission as a whole is increased by supplemental use of the separate synchronizing device in addition to the synchronizing device provided corresponding to the selected gear, synchronization capacity of each synchronizing device may be reduced.

According to the present invention, the control means includes a rotation speed detection device detecting the rotation speed of the input shaft, and the auxiliary synchronizing means controls the actuator to move the sleeve to the neutral position when a rotation speed of the input shaft detected by the rotation speed detection device synchronize a rotation speed of the selected gear.

According to the present invention, the control means includes the rotation speed detection device detecting the rotation speed of the input shaft, and the sleeve corresponding to the auxiliary gear is moved to the neutral position by the auxiliary synchronizing means in a case where the rotation speed of the input shaft detected by the rotation speed detection device accords with, or synchronizes the rotation speed of the selected gear. Accordingly, the input shaft can be synchronized to the rotation speed of the selected gear accurately and swiftly, and thus the time required for shift change can be reduced.

With the construction of the transmission according to the present invention, the clutch mechanism includes a first clutch mechanism and a second clutch mechanism, the input shaft includes a first input shaft connected to the first clutch mechanism and a second input shaft connected to the second clutch mechanism, and the auxiliary synchronizing means controls the actuator to move the sleeve, which is provided corresponding to the auxiliary gear provided at one of the first input shaft and the second input shaft to which the selected gear is provided, to the synchronized position.

According to the present invention, the transmission includes the first and second clutch mechanisms and the first and second input shafts, and the auxiliary synchronizing means controls the actuator to synchronize the sleeve corresponding to another gear, which is provided on one of the first and second input shafts on which the selected gear is provided, in response to the synchronization operation of the selected gear by the synchronization means. Accordingly, the time required for changing gears is reduced.

With the construction of the transmission according to the present invention, the control means includes an auxiliary gear selecting means which compares a rotation speed of the selected gear and the rotation speed of the input shaft, selects the gear having a greater gear ratio than a gear ratio of the selected gear as the auxiliary gear in a case where the rotation speed of the input shaft is less than the rotation speed of the selected gear, and selects the gear having a less gear ratio than a gear ratio of the selected gear as the auxiliary gear in a case where the rotation speed of the input shaft is greater than the rotation speed of the selected gear.

According to the present invention, the control means includes the auxiliary gear selecting means which compares the rotation speed of the selected gear and the rotation speed of the input shaft, and the gear having a smaller or greater gear ratio than a gear ratio of the selected gear is selected as the auxiliary gear for assisting, or supporting the synchronization by the auxiliary synchronizing means. Accordingly, the rotation speed of the input shaft is securely synchronized, thus to reduce the time required for gear shifting operation.

According to another aspect of the present invention, a control method for controlling a transmission includes a clutch mechanism moving to switch between a connected state where the clutch mechanism is connected to a power source and a disconnected state where the clutch mechanism is disconnected from the power source, an input shaft connected to the clutch mechanism, an output shaft, a transmission mechanism including a plurality of gears provided between the input shaft and the output shaft, the transmission mechanism including a synchronizing device selectively synchronizing a rotation speed of the input shaft and a rotation speed of the gears, a gear selecting apparatus including a plurality of sleeves respectively positioned between the corresponding gears and at least one actuator for actuating the sleeves, the sleeve selectively moving to a neutral position where the sleeve is not engaged with any of the gears, to an engaged position where the sleeve is engaged with a gear selected among the gears, and to a synchronized position where the gear and the input shaft are synchronized by the synchronizing device between the neutral position and the engaged position, the actuator actuating the sleeve to selectively move to the neutral position and to the engaged position, and a control means controlling the clutch mechanism and the actuator. The control method further includes steps of selecting the sleeve provided corresponding to the selected gear and controlling the actuator to move the selected sleeve to the synchronized position so that the input shaft and the selected gear are synchronized by the synchronizing device, and controlling the corresponding actuator so that the sleeve provided corresponding to an auxiliary gear which is the gear different from the selected gear is moved to the synchronized position to perform an auxiliary synchronization by the synchronizing device corresponding to the auxiliary gear.

Further, according to the present invention, the gear selecting apparatus includes the actuator corresponding to the sleeve and the actuator is controlled to move the sleeve provided corresponding to the gear different from the selected gear to the synchronized position in addition to selecting the sleeve corresponding to the selected gear and synchronizing the selected gear. Accordingly, not only the synchronization by the synchronizing device provided corresponding to the selected gear but also the synchronization by the synchronizing device provided corresponding to another gear is performed. This assists the synchronization of the rotation speed of the input shaft to the selected gear. In other words, the rotation speed of the input shaft is swiftly synchronized, and thus the synchronization time is reduced. In consequence, the time required for shifting gears is shortened, and operational feeling is enhanced. Further, because the synchronization capacity of the transmission as a whole is increased by supplemental use of the separate synchronizing device in addition to the synchronizing device provided corresponding to the selected gear, synchronization capacity of each synchronizing device may be reduced.

According to the present invention, the transmission is controlled to detect the rotation speed of the input shaft, and control the actuator to move the sleeve corresponding to the auxiliary gear from the synchronized position to the neutral position in a case where the detected rotation speed of the input shaft synchronizes the rotation speed of the selected gear.

According to the control method of the present invention, the rotation speed of the input shaft is detected. The sleeve corresponding to the auxiliary gear is moved to the neutral position not to synchronize, in a case where the rotation speed of the detected input shaft accords with, or synchronizes the rotation speed of the selected gear. According to this construction, the input shaft can be synchronized to the rotation speed of the selected gear accurately and swiftly, and thus the time for shifting gears can be shortened.

With the construction of the transmission according to the present invention, the clutch mechanism includes a first clutch mechanism and a second clutch mechanism, the input shaft includes a first input shaft connected to the first clutch mechanism and a second input shaft connected to the second clutch mechanism, and the control method controlling the corresponding actuator to move the sleeve, which is provided corresponding to the auxiliary gear provided on one of the first input shaft and the second input shaft to which the selected gear is provided, to the synchronized position to perform the auxiliary synchronization.

According to the control method of the present invention, the transmission includes the first and second clutch mechanisms and the first and second input shafts. Because the sleeve, which is provided corresponding to the gear provided on the input shaft to which the selected gear is provided and is different from the selected gear, can be controlled by the actuator in response to the synchronizing operation of the selected gear. Thus, the time required for gear shifting operation can be shortened.

According to the present invention, the transmission is controlled to compare a rotation speed of the selected gear and a rotation speed of the input shaft, select the gear having a greater gear ratio than a gear ratio of the selected gear as the auxiliary gear in a case where the rotation speed of the input shaft is less than the rotation speed of the selected gear, and select the gear having a less gear ratio than a gear ratio of the selected gear as the auxiliary gear in a case where the rotation speed of the input shaft is greater than the rotation speed of the selected gear. According to the control method of the embodiment, because the rotation speed of the selected gear and the rotation speed of the input shaft are compared and the gear having a smaller gear ratio or greater gear ratio than the gear ratio of the selected gear is selected as a gear to assist, or support the synchronization, the rotation speed of the input shaft can be securely and swiftly synchronized. Accordingly, the time required for shifting gears can be reduced.

### BRIEF DESCRIPTION OF THE DRAWINGS

The foregoing and additional features and characteristics of the present invention will become more apparent from the following detailed description considered with the reference to the accompanying drawings, wherein:

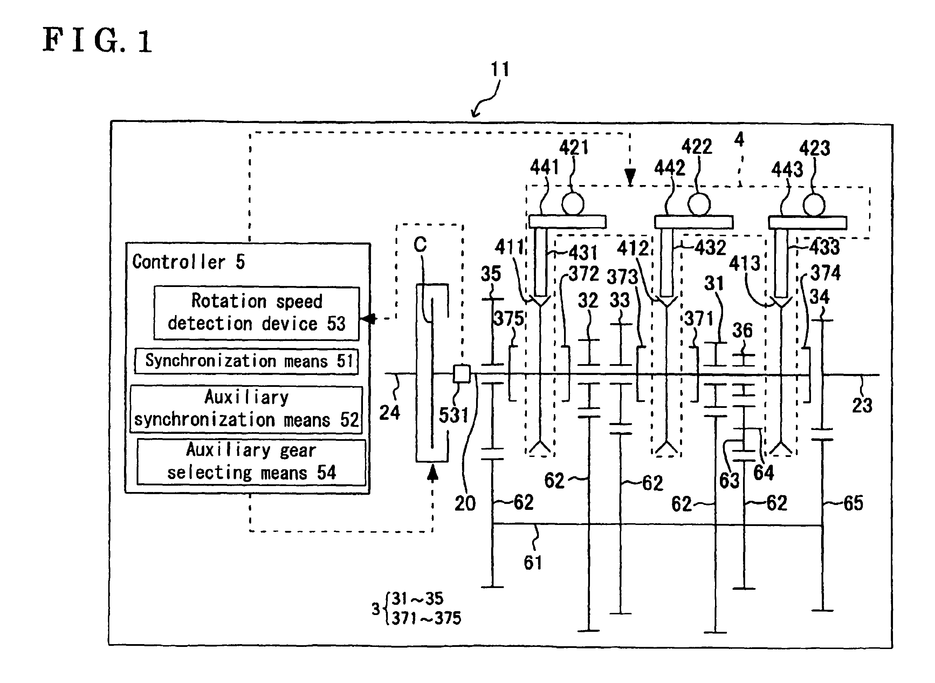

Fig. 1 is a diagram illustrating a transmission apparatus according to a first embodiment;

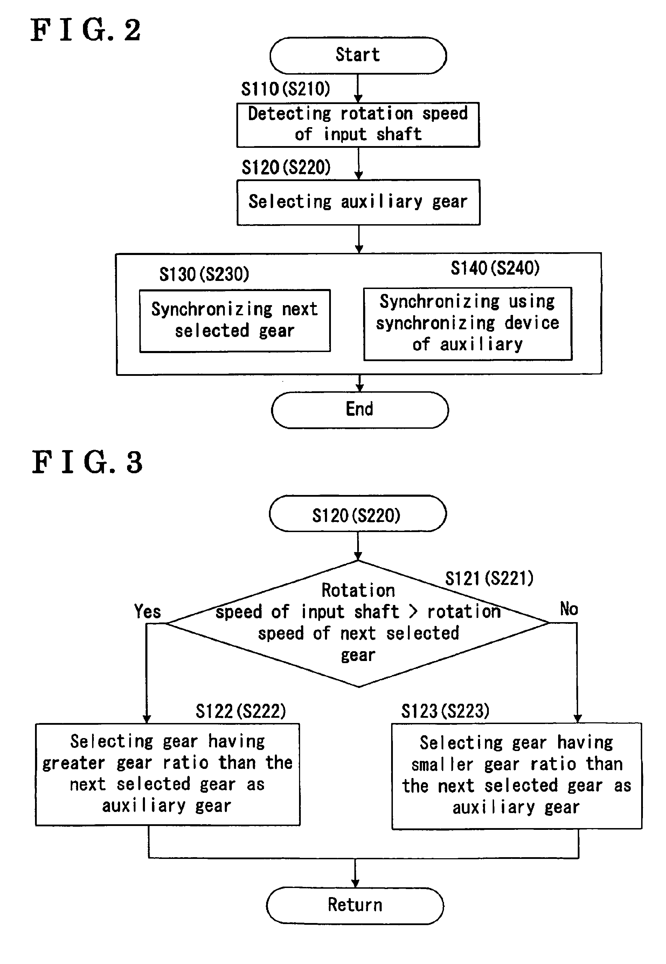

Fig. 2 is a flowchart illustrating a controlling method of the transmission apparatus according to the first embodiment;

Fig. 3 is a flowchart specifying an auxiliary gear selecting process illustrated in Fig. 2;

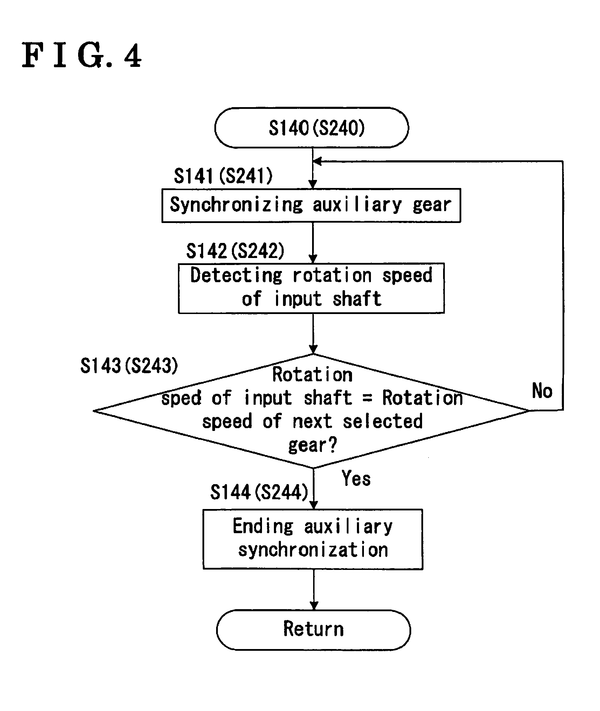

Fig. 4 is a flowchart specifying an auxiliary synchronization process illustrated in Fig. 2;

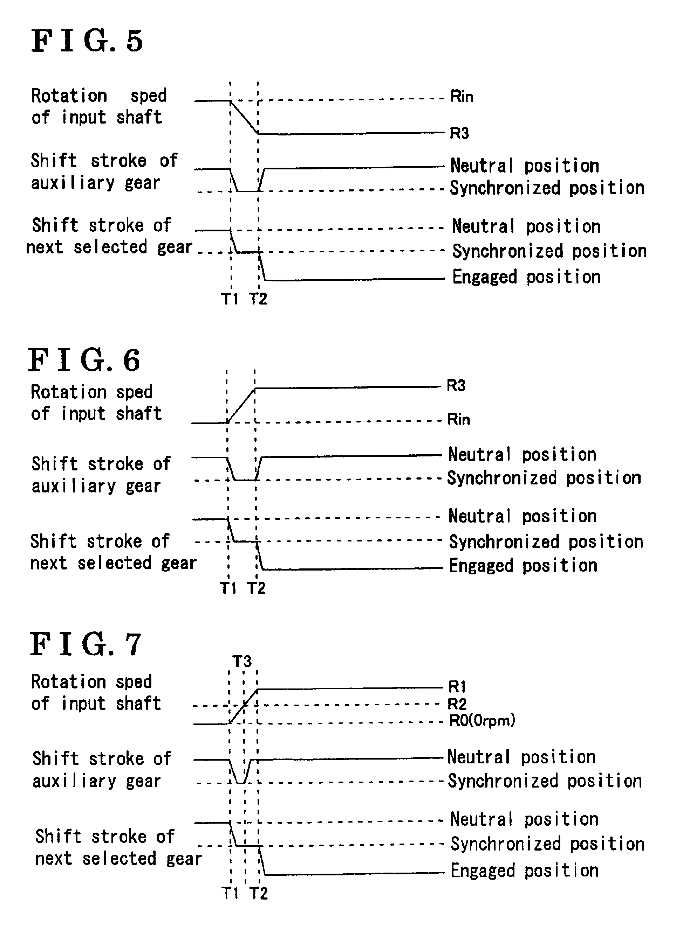

Fig. 5 is a timing diagram illustrating a relationship between a rotation speed of an input shaft, a stroke generated when an auxiliary shift stage is established and a stroke generated when shifting to a next shift stage relating to the transmission apparatus and the controlling method of the same in a case where the shift stage is switched from a second shift stage to a third shift stage;

Fig. 6 is a timing diagram illustrating a relationship between the rotation speed of the input shaft, the stroke generated when the auxiliary shift stage is established and the stroke generated when shifting to a next shift stage relating to the transmission apparatus and the controlling method of the same in a case where the shift stage is switched from a fourth shift stage to the third shift stage;

Fig. 7 is a timing diagram illustrating a relationship between the rotation speed of the input shaft, the stroke generated when the auxiliary shift stage is established and the stroke generated when shifting to a next shift stage relating to a second modified example of the transmission apparatus and the controlling method of the same according to the first embodiment in a case where the shift stage is switched to a first shift stage;

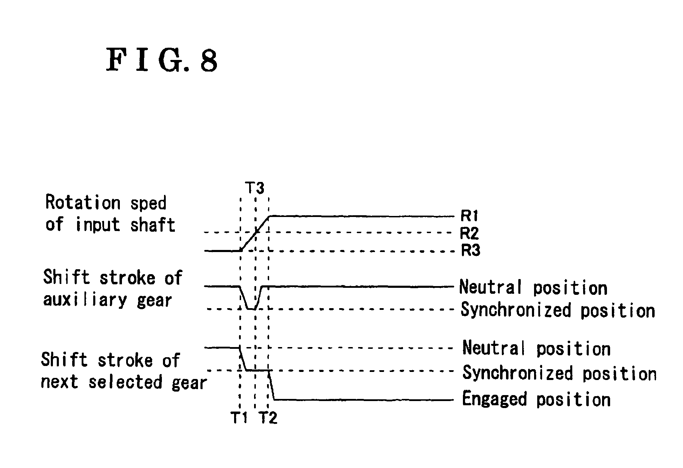

Fig. 8 is a timing diagram illustrating a relationship between the rotation speed of the input shaft, the stroke generated when the auxiliary shift stage is established and the stroke generated when shifting to a next shift stage relating to a third modified example of the transmission apparatus and the controlling method of the same according to the first embodiment in a case where the shift stage is switched from the third shift stage to the first shift stage;

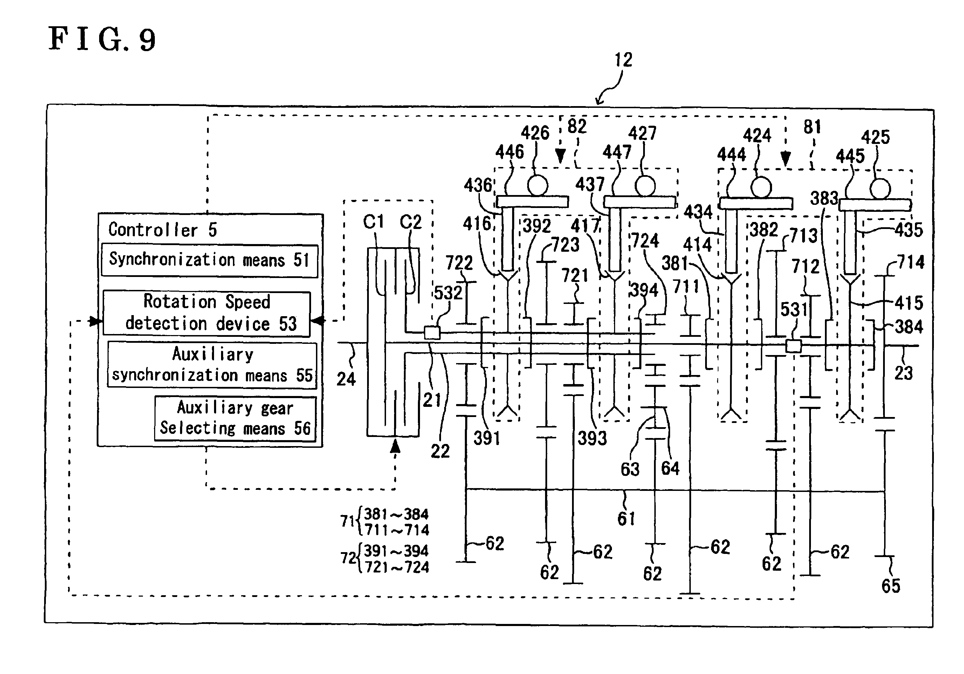

Fig. 9 is a diagram illustrating a transmission apparatus according to a second embodiment;

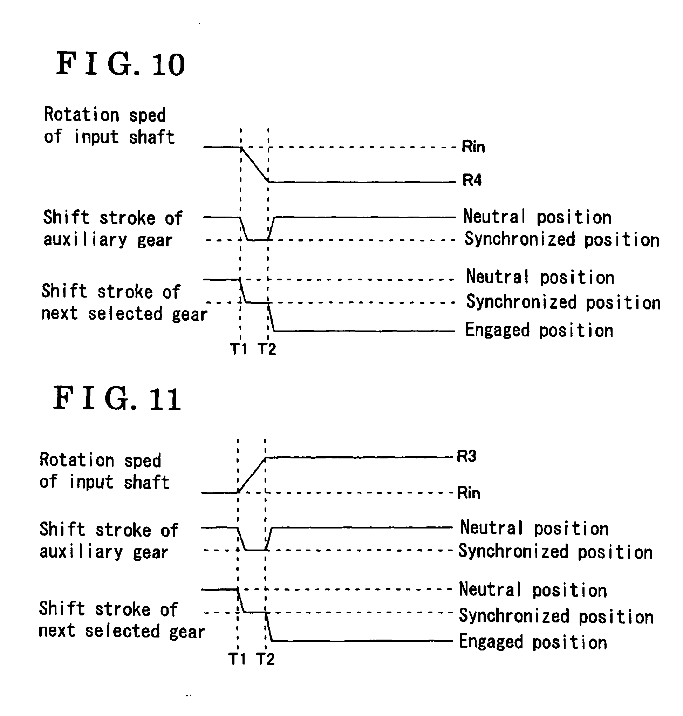

Fig. 10 is a timing diagram illustrating a relationship between rotation speed of an input shaft, a stroke generated when an auxiliary shift stage is established and a stroke generated when shifting to a next shift stage relating to the transmission apparatus and a controlling method of the same according to the second embodiment in a case where the shift stage is switched from a third shift stage to a fourth shift stage; and

Fig. 11 is a timing diagram illustrating a relationship between the rotation speed of the input shaft, the stroke generated when the auxiliary shift stage is established and the stroke generated when shifting to a next shift stage relating to the transmission apparatus and the controlling method of the same according to the second embodiment in a case where the shift stage is switched from the fourth shift stage to the third shift stage.

### DETAILED DESCRIPTION

Embodiments of the present invention will be explained with reference to illustrations of drawing figures as follows. According to the embodiments, a transmission is mounted to a vehicle.

A first embodiment will be explained referring to Figs. 1-8. As shown in Fig. 1, a transmission 11 of the first embodiment includes a clutch mechanism C, an input shaft 20, an output shaft 23, a transmission mechanism 3, a gear selecting apparatus (gear selecting means) 4, and a controller (control means) 5.

The clutch mechanism C is positioned between an internal combustion output shaft 24 of an internal combustion engine (engine) serving as a power source and the input shaft 20 to connect or disconnect a transmission of an output torque from the internal combustion engine to the input shaft 20. A connected state is defined as a state where an output torque from the internal combustion engine is transmitted to the input shaft 20, and a disconnected state is defined as a state where an output torque from the internal combustion engine is not transmitted to the input shaft 20.

The input shaft 20 is connected to the clutch mechanism C to transmit a torque.

The output shaft 23 arranged coaxially to the input shaft 20 in a shaft direction is configured to output an output torque transmitted via the transmission mechanism 3 to wheels.

The transmission mechanism 3 is configured to establish shift stages having first to fifth speeds and a reverse stage (rearward) which are provided to transmit a torque between the input shaft 20 and the output shaft 23, and synchronizing devices 371-375. Shift stages establishing first speed, third speed, fifth speed and reverse stage are structured by transmission gears 31-33, 35, 36 which are relatively rotatably retained at an outer periphery of the input shaft 20, and counter gears 62 which are fixed to a countershaft 61 arranged in parallel to the input shaft 20 so as to integrally rotate. The counter gears 62 are provided corresponding to the transmission gears 31-33, 35, and 36, respectively. Thus, a torque outputted from an internal combustion engine is transmitted to a driven gear 34 fixedly provided at the output shaft 23 so as to integrally rotate therewith via a counter shaft side driver gear 65 arranged coaxially to the counter gear 62. According to the construction of the transmission 11 of the first embodiment, a fourth speed is established by directly connecting the input shaft 20 and the output shaft 23 without interposing the counter gear 62. A gear 31 is configured to be selected to establish a first speed, a gear 32 is configured to be selected to establish a second speed, a gear 33 is configured to be selected to establish a third speed, a gear 35 is configured to be selected to establish a fifth speed, and a gear 36 is configured to be selected to establish a reverse stage. The gear 35, the gear 32, the gear 33, the gear 31, the gear 36, and the driven gear 34 are arranged in the mentioned order from the clutch mechanism C side to the output shaft 23 side. The synchronizing devices 371-375 are positioned between the corresponding gears 31-35 and corresponding sleeves 411-413, respectively, to synchronize a rotation of the gears 31-35 which rotate relative to the input shaft 20 and a rotation of the sleeves 411-413 which integrally rotates with the input shaft 20. The synchronizing device 371 is configured to establish a first speed, the synchronizing device 372 is configured to establish a second speed, the synchronizing device 373 is configured to establish a third speed, the synchronizing device 374 is configured to establish a fourth speed, and the synchronizing device 375 is configured to establish a fifth speed. According to the first embodiment, a synchronizing device for establishing a reverse stage is not provided.

A gear selecting apparatus 4 includes the sleeves 411-413, actuators 421-423, forks 431-433, and fork shafts 441-443. The sleeves 411-413 each formed with a cylindrical member and configured to integrally rotate with the input shaft 20 are positioned between corresponding two transmission gears at an outer periphery of the input shaft 20. According to the first embodiment, the sleeve 411 is positioned between the gear 35 for establishing a fifth speed and the gear 32 for establishing a second speed, the sleeve 412 is positioned between the gear 33 for establishing a third speed and the gear 31 for establishing a first speed, and the sleeve 413 is positioned between the gear 36 configured to establish a reverse stage and the driven gear 34. Each of the sleeves 411-413 is configured to be positioned at a neutral position where the sleeve 411-413 does not engage with any gears, at an engaged position where the selected sleeve 411-413 engages with the corresponding gear 31-35, and at a synchronized position where the sleeve 411-413 is frictionally engaged with the corresponding synchronizing device 371-375 between the neutral position and the corresponding gear. The sleeves 411-413 are configured to move between the neutral position and the engaged position in an axial direction. In those circumstances, the sleeve 413 does not move from the neutral position to the gear 36 for establishing a reverse stage. The actuators 421-423 serve as power sources to move the sleeves 411-413 between the neutral position and the engaged position via the forks 431-433 and fork shafts 441-443. The forks 431-433 are positioned at an outer peripheral side of the sleeves 411-413, respectively, and are engaged with the corresponding sleeves 411-413 so that the sleeves 411-413 move between two transmission gears (i.e., between the neutral position and the engaged position) while rotating. The fork shafts 441-443 are rod-shaped members which are integrally engaged wit the forks 431-433.

An idler gear 63 is provided between the gear 36 and the counter gear 62 to establish a reverse stage. The idler gear 63 is retained at an idler shaft 64 so as to be rotatable and to be movable in an axial direction. The idler shaft 64 is fixedly arranged in parallel to the input shaft 20 and the counter shaft 61 so as not to rotate. In a case where a reverse stage is selected as a shift stage, the idler gear 63 is moved to engage with the gear 36 and the counter gear 62 to transmit a rotation of the input shaft 20 to the gear 36 for establishing a reverse stage, the idler gear 63 rotates, and the counter gear 62 rotates to rotate the counter shaft 61.

The controller (control means) 5 includes a synchronizing means (synchronizing device) 51, an auxiliary synchronizing means (auxiliary gear synchronization device) 52, a rotation speed detection device (rotation speed detecting device) 53, and an auxiliary gear-selecting means (auxiliary gear-selecting device) 54. The synchronizing means 51 selects one of the sleeves 411-413 which corresponds to a selected shift stage (i.e., hereinafter referred to as a next shift stage), and controls the corresponding actuator 421, 422, 423 to move a corresponding sleeve 411, 412, 413 to a synchronized position so that rotations of the input shaft 20 and the selected gear 31-35 are synchronized by means of the synchronizing device 371-375.

The auxiliary synchronizing means 52 controls the corresponding actuator 421-423 to move the sleeve 411-413 corresponding to an auxiliary gear to the synchronized position. The rotation speed detection device 53 detects a rotation speed of the input shaft 20 by means of a sensor 531 provided at the input shaft 20.

The auxiliary gear-selecting means 54 compares a rotation speed of a gear for a next shift stage and a rotation speed of the input shaft 20. Then, the auxiliary gear-selecting means 54 selects a gear having a greater gear ratio than a gear ratio of a gear selected for the next shift stage as an auxiliary gear in a case where the rotation speed of the input shaft 20 is less than the rotation speed of the gear selected for the next shift stage. On the other hand, in a case where the rotation speed of the input shaft 20 is greater than the rotation speed of the gear selected for the next shift stage, a gear having a less gear ratio than the gear ratio of the gear selected for the next shift stage is selected as an auxiliary gear. Rotation speed of a gear can be obtained on the basis of a gear ratio predetermined for each gear and rotation speed of the output shaft 23 (or, vehicle speed) at the timing. Thus, rotation speed of a gear for a next shift stage can be determined by a calculation at a timing when the gear for the next stage is selected.

According to the first embodiment, the transmission 11 is controlled by the control means 5 on the basis of a control method for a transmission. The control method is shown in Figs. 2-4. Figs. 2-4 show an example of logic for a control method, and the control method for controlling the transmission 11 is not limited.

The control means 5 detects rotation speed of the input shaft 20 by means of the rotation speed detection device 53 (rotation speed detecting step S110). Next, the auxiliary gear-selecting means 54 compares a rotation speed of a gear for a next shift stage and a rotation speed of the input shaft 20 detected by the rotation speed detection device 53 (at the rotation speed detecting step S110), and selects an auxiliary gear on the basis of compared results (auxiliary gear-selecting step S120).

At the auxiliary gear-selecting step S120, the rotation speed of the gear selected for the next shift stage and rotation speed of the input shaft 20 are compared (rotation speed comparing step S121). Thereafter, in a case where the rotation speed of the input shaft 20 is less than the rotation speed of the gear selected for the next shift stage, a gear whose gear ratio is greater than a gear ratio of the selected gear selected for the next shift stage is selected as an auxiliary gear (S122 where a gear ratio for an auxiliary gear is greater). On the other hand, in a case where the rotation speed of the input shaft 20 is greater than the rotation speed of the selected gear selected for the next shift stage, a gear whose gear ratio is less than a gear ratio of the gear selected for the next shift stage is selected as an auxiliary gear (S123 where a gear ratio for an auxiliary gear is smaller).

Then, the synchronizing means 51 selects the sleeve 411-413 corresponding to the next shift stage (the selected gear selected for the next shift stage), controls the actuator 421-423 corresponding to the selected sleeve 411-413, and moves the selected sleeve 411-413 to a synchronized position at the gear selected for the next shift stage (synchronization step S130). In the meantime, simultaneous to the transaction of synchronization step S130, the auxiliary synchronizing means 52 controls the corresponding actuator 421-423 to move the sleeve 411-413 corresponding to the selected auxiliary gear to a synchronized position (auxiliary synchronization step S140). At the auxiliary synchronization step S140, the corresponding actuator 421-423 is controlled to move the sleeve 411-413 corresponding to the selected auxiliary gear to the synchronized position (auxiliary gear synchronization step S141), and detects the rotation speed of the input shaft 20 by means of the rotation speed detection device 53 after a predetermined time elapses (rotation speed detecting step S142). Then, the rotation speed of the gear selected for the next shift stage and the rotation speed of the input shaft 20 are compared (rotation speed comparing step S143). In a case where the rotation speed of the input shaft 20 is not equal to the rotation speed of the gear selected for the next shift stage, the transaction returns to auxiliary gear synchronization step S141. In a case where rotation speed of the input shaft 20 is assumed to be equal to the rotation speed of the gear selected for the next shift stage, the corresponding actuator 421-423 is controlled to move the sleeve 411-413 corresponding to the auxiliary gear from the synchronized position to a neutral position (step S144 for ending auxiliary synchronization). In the foregoing explanations, at rotation speed comparing step S143, the rotation speed of the gear selected for the next shift stage and the rotation speed of the input shaft 20 are compared, and the synchronization of the auxiliary gear is ended in a case where the rotation speed of the gear selected for the next shift stage and the rotation speed of the input shaft 20 are equal. However, the synchronization of the auxiliary gear may be ended in a case where the rotation speed of the input shaft 20 is assumed to be a rotation speed close to the rotation speed of the gear selected for the next shift stage. In other words, a predetermined range may be set to a rotation speed of a gear selected for the next shift stage to determine whether the rotation speed of the gear selected for the next shift stage and the rotation speed of the input shaft 20 are approximately equal.

At synchronization step S130, when auxiliary synchronization step S140 is completed, the sleeve 411-413 corresponding to the gear selected for the next shift stage is moved from the synchronized position to an engaged position.

A procedure for controlling the transmission 11 by a control method for the transmission will be explained referring to a case where a gear is shifted to a third shift stage during a vehicle travels with a second shift stage and a case where a gear is shifted to a third shift stage during a vehicle travels in a fourth shift stage. In those circumstances, for explanatory purposes, a gear for a third shift stage (a third speed gear) is selected as a gear selected for the next shift stage for both instances, and rotation speed of the third speed gear in this circumstance is defined as R3.

A case where a gear is shifted from a second shift stage to a third shift stage will be explained hereinafter. First, rotation speed Rin of the input shaft 20 is detected at rotation speed detecting step S110. Next, at auxiliary gear-selecting step S120, rotation speed of the input shaft 20 and rotation speed of the third speed gear are compared. In those circumstances, rotation speed of the input shaft 20 which has been rotated in a second speed gear is deemed to be maintained at a rotation speed corresponding to the rotation speed of the second speed gear right after the input shaft 20 is disengaged from the second speed gear. Thus, in a case where a gear is shifted from the second speed gear to the third speed gear instantly, the rotation speed Rin of the input shaft 20 is assumed to be greater than the rotation speed R3 of the third speed gear. In those circumstances, because the rotation speed of the input shaft 20 is greater than the rotation speed of the third speed gear when comparing the rotation speed Rin to the rotation speed R3, a fourth speed gear, which is positioned corresponding to the sleeve 411, 413 which is different from the sleeve 412 corresponding to the gear selected for the next shift stage and whose gear ratio is less than a gear ratio of the gear selected for the next shift stage, is selected as an auxiliary gear at Step S123 (selecting auxiliary gear having smaller gear ratio S123). Instead of the fourth speed gear, a fifth speed gear may also be selected as an auxiliary gear. Then, at synchronization step S130, the sleeve 412 corresponding to the third speed gear is selected, and the corresponding actuator 422 is controlled to move the sleeve 412 to a synchronized position of the third speed gear 33. Simultaneous to the transaction of synchronization step S130, auxiliary synchronization step S140 is executed. At auxiliary gear synchronization step S141, the sleeve 413 corresponding to the fourth speed gear is selected, and the corresponding actuator 423 is controlled to move the sleeve 413 to the synchronized position. Thereafter, after a predetermined time elapses, the rotation speed of the input shaft 20 is detected at rotation speed detecting step S142. In a case where the rotation speed of the input shaft 20 becomes the rotation speed R3 of the third speed gear at rotation speed comparing step S143, step S144 for ending auxiliary synchronization is executed. At step S144 for ending the auxiliary synchronization, the auxiliary synchronizing means 52 controls the actuator 423 to move the sleeve 413 corresponding to the fourth speed gear from the synchronization position to a neutral position. In a case where the rotation speed of the input shaft 20 detected at rotation speed detecting step S142 has not reached the rotation speed of the gear selected for the next shift stage, the transaction returns to S141 (auxiliary gear synchronization step) to continue the transaction until the rotation speed of the input shaft 20 reaches the rotation speed of the gear selected for the next shift stage.

Fig. 5 shows a timing diagram explaining a relationship between a rotation speed of the input shaft 20, a shift stroke of an auxiliary gear, and a shift stroke of a gear selected for the next shift stage. The shift strokes of the gears are illustrated so as to correspond to the position of the sleeves 411-413. As shown in Fig. 5, synchronization step S130 and auxiliary synchronization step S140 are executed at time T1, and the synchronization of the auxiliary gear is ended at step S144 for ending the auxiliary synchronization because the rotation speed of the input shaft 20 reaches the rotation speed R3 of the third speed gear at time T2.

A case where a gear is shifted from a fourth shift stage to a third shift stage will be explained hereinafter. First, a rotation speed Rin of the input shaft 20 is detected at rotation speed detecting step S110. Next, at auxiliary gear-selecting step S120, the rotation speed of the input shaft 20 and a rotation speed of the third speed gear are compared. In those circumstances, the rotation speed of the input shaft 20 which has been rotated in a fourth speed gear is deemed to be maintained at a rotation speed corresponding to the rotation speed of the fourth speed gear immediately after the input shaft 20 is disengaged from the fourth speed gear. Thus, in a case where a gear is shifted from the fourth speed gear to the third speed gear instantly, the rotation speed Rin of the input shaft 20 is assumed to be less than the rotation speed R3 of the third speed gear. In those circumstances, because the rotation speed of the input shaft 20 is less than the rotation speed of the third speed gear when comparing the rotation speed Rin to the rotation speed R3, a second speed gear, which is positioned corresponding to the sleeve 411, 413 which is different from the sleeve 412 corresponding to the gear selected for the next shift stage and whose gear ratio is greater than a gear ratio of the gear selected for the next shift stage, is selected as an auxiliary gear at S122 (selecting auxiliary gear having greater gear ratio S122). Then, at synchronization step S130, the sleeve 412 corresponding to the third speed gear is selected, and the corresponding actuator 422 is controlled to move the sleeve 412 to the synchronized position of the third speed gear. Simultaneous to the transaction of synchronization step S130, auxiliary synchronization step S140 is executed. At auxiliary gear synchronization step S141, the sleeve 411 corresponding to the second speed gear is selected, and the corresponding actuator 421 is controlled to move the sleeve 411 to the synchronized position. Thereafter, after a predetermined time elapses, the rotation speed of the input shaft 20 is detected at rotation speed detecting step S142. In a case where the rotation speed of the input shaft 20 corresponds to the rotation speed R3 of the third speed gear at rotation speed comparing step S143, step S144 for ending auxiliary synchronization is executed. At step S144 for ending auxiliary synchronization, the auxiliary synchronizing means 52 controls the actuator 421 to move the sleeve 411 corresponding to the second speed gear from the synchronized position to a neutral position. In a case where the rotation speed of the input shaft 20 detected at rotation speed detecting step S142 has not reached the rotation speed of the gear selected for the next shift stage, the transaction returns to S141 (auxiliary gear synchronization step) to continue the transaction until the rotation speed of the input shaft 20 reaches the rotation speed of the gear selected for the next shift stage.

Fig. 6 shows a timing diagram explaining a relationship between rotation speed of the input shaft 20, a shift stroke of an auxiliary gear, and a shift stroke of a gear selected for the next shift stage. As shown in Fig. 6, synchronization step S130 and auxiliary synchronization step S140 are executed at time T1, and the synchronization of the auxiliary gear is ended at step S144 for ending auxiliary synchronization because the rotation speed of the input shaft 20 reaches the rotation speed R3 of the third speed gear at time T2.

According to a layout of gear sets of the transmission 11 of the first embodiment, the transmission 11 and the control method for the transmission 11 is applied when shifting gear stages from the first speed to the second, the third, and the fourth speed, from the second speed to the third and fourth speed, from the third speed to the second speed and the fourth speed, from the fourth speed to the second and third speed, and from the fifth speed to the second speed, the third speed, and the fourth speed. In other words, the synchronization is assisted, or supported by another gear when the gear is shifted to the second speed gear, the third speed gear, and the fourth speed gear (i.e., a synchronization is not assisted by another gear when the gear is shifted to the first speed gear and the fifth speed gear). Accordingly, each of synchronization capacities of the synchronizing devices 371-375 corresponding to the second speed gear, the third speed gear, and the fourth speed gear, respectively, can be reduced (downsized). By reducing the synchronization capacity, a manufacturing cost of the synchronizing device is reduced and the transmission 11 can be downsized.

With the construction of the transmission 11 and the control method for the transmission according to the first embodiment, in addition to the synchronizing means 51 (synchronization step S130) for selecting the sleeve 411-413 corresponding to the selected gear and synchronizing the sleeve 411-413 to the selected gear, the auxiliary synchronizing means 52 (auxiliary synchronization step S140) for controlling the actuator 421-423 to move the sleeve 411-413 corresponding to the auxiliary gear to the synchronized position is provided. According to the foregoing construction, not only the synchronization by a synchronizing device corresponding to the selected gear for the next shift stage, but also the synchronization by a synchronizing device corresponding another gear is performed, and thus the synchronization of the rotation speed of the input shaft 20 is assisted (supported). In other words, a torque for increasing or decreasing the rotation speed of the input shaft is given by plural synchronizing devices. Namely, the rotation speed of the input shaft 20 is synchronized to a gear selected for the next shift stage more swiftly, and a synchronization time is reduced. In consequence, a time required for changing gears is reduced, and an operational feeling is enhanced. Further, because the synchronization capacity of the transmission as a whole can be increased by applying another synchronizing device 371-375 in addition to the synchronizing device 371-375 corresponding to the selected gear for the next shift stage, the synchronization capacity of each of the synchronizing devices can be reduced (each of the synchronizing devices can be downsized to have reduced synchronization capacity).

Further, according to the first embodiment, because the rotation speed detection device 53 (rotation speed detecting step S142) detecting the rotation speed of the input shaft 20 is provided and the sleeve 411-413 is moved to the neutral position so as not to synchronize by the auxiliary synchronizing means 52 in a case where the rotation speed of the input shaft 20 detected by the rotation speed detection device 53 conforms to the rotation speed of the selected gear, rotation speed of the input shaft can be synchronized to the rotation speed of the selected gear more accurately and more swiftly (step S144 for ending auxiliary synchronization), and the time for changing gears is reduced.

Still further, according to the first embodiment, because an auxiliary gear is determined by comparing the rotation speed of the input shaft 20 and the rotation speed of a selected gear by the auxiliary gear selecting means 54 (auxiliary gear-selecting step S120), the rotation speed of the input shaft 20 can be more securely synchronized and the time for changing gears can be reduced.

In addition to the foregoing advantages, in a case where one of the synchronizing devices is damaged, synchronization for gear shifting can be performed using another synchronizing device so that a vehicle can travel to a repair shop.

A modified example of the first embodiment will be explained as follows. Particular features of the first modified example will be explained, and the explanations for the features common to the first embodiment will not be repeated. According to the modified example of the first embodiment, plural gears may be selected as auxiliary gears. More particularly, taking, for example, a case where shift stages are changed from the fourth speed to the third speed according to the first embodiment, the fourth speed gear and the fifth speed gear are selectable and the fourth speed gear is selected. Instead of selecting one of the fourth speed gear and the fifth speed gear, in this case, both of the fourth speed gear and the fifth speed gear may be applied as the auxiliary gears. Plural gears may be applied as auxiliary gears if there are gears whose corresponding sleeves and actuators differ from the sleeve and actuator corresponding to a gear selected for the next shift stage, and if those gears can accelerate the synchronization of the gear for the next shift stage. According to the foregoing construction, the synchronization is performed more swiftly, and a time for changing gears can be reduced.

A second modified example of the first embodiment will be explained as follows. Particular features of the second modified example will be explained, and the explanations for the features common to the first embodiment will not be repeated. Immediately after the input shaft 20 is disconnected from the output shaft 23 upon the disengagement of the gear 31-36 of the previous shift stage from the sleeve 411-413, there is a possibility that a rotation speed of the input shaft 20 detected by the rotation speed detection device 53 of the control means 5 suddenly decreases or suddenly increases depending on a traveling state of the vehicle. For example, the rotation speed of the input shaft 20 suddenly declines in a case where the gear selected for the next shift stage is not engaged promptly after the disengagement of the gear prior to shifting gears. In those circumstances, according to the second modified example of the first embodiment, the synchronization of the next selected gear is assisted, or supported by the synchronizing device of another gear or other gears including the first speed gear and the fifth speed gear reaching half way of the synchronization of the next selected gear.

For example, provided that the detected rotation speed Rin of the input shaft 20 is close to zero rpm (0 rpm), the rotation speed of the first speed gear is indicated as R1 and the second speed gear is applied as an auxiliary gear. As shown in Fig. 7, the synchronization of the second speed gear serving as the auxiliary gear is ended at time T3 that is defined at an earlier timing than the timing of the synchronization of the first speed that is completed at time T2. According to this construction, although the synchronization of the first speed gear is not fully supported during the entire synchronization time, because the synchronization of the first speed gear is temporarily assisted by the synchronizing device corresponding to another gear or the synchronizing devices corresponding to other gears, the time for changing gears can be reduced. Likewise, at other gear shift stages from the second shift stage to the fifth shift stage, the synchronization of the gear selected for the next shift stage is temporarily assisted by the synchronizing device corresponding to another gear or the synchronizing devices corresponding to other gears, based on the detected rotation speed of the input shaft 20 and the rotation speed of the gear selected for the next shift stage (i.e., which changes depending on a vehicle speed, or the like).

A third modified example of the first embodiment will be explained as follows. Particular features of the third modified example will be explained, and the explanations for the features common to the first embodiment will not be repeated. With the construction of the transmission 11 and a control method for the transmission of the third modified example of the first embodiment, the synchronization by the synchronizing device corresponding to the gear selected for the next shift stage is temporarily assisted by the synchronization of the synchronizing device corresponding to an auxiliary gear or the synchronizing devices corresponding to auxiliary gears.

For example, in a case where the gears are changed from the third speed gear to the first speed gear, provided that the detected rotation speed of the input shaft 20 immediately after the third speed gear is disengaged from the sleeve 412 is close to rotation speed R3 for the third speed gear. In those circumstances, according to the first embodiment, because there is no gear having a greater gear ratio than the first speed gear, the synchronization is performed only by the synchronizing device 371 corresponding to the first speed without selecting an auxiliary gear. On the other hand, according to the third modified example of the first embodiment, the second speed gear is applied as the auxiliary gear when synchronizing the first speed gear. As shown in Fig. 8, according to the third modified example, the synchronization of the second speed gear serving as the auxiliary gear is ended at time T3 that is defined at an earlier timing than the synchronization of the first speed gear that is completed at time T2. According to the foregoing control method, although the synchronization of the first speed is not fully supported during the entire synchronization time, the synchronization of the gear selected for the next shift stage is temporarily assisted by the synchronizing device corresponding to another gear or the synchronizing devices corresponding to other gears. In consequence, a time for changing gears can be reduced. Likewise the case for the first speed gear, at other gear shift stages from the second shift stage to the fifth shift stage, irrespective of the magnitude relation in terms of the levels of the rotation speed of the input shaft 20 and the rotation speed of a gear selected for the next shift stage, a gear which is any other than, or different from the gear selected for the next shift stage and for which a sleeve different from the sleeve corresponding to the gear selected for the next shift stage is available can be selected as an auxiliary gear.

A second embodiment of the present invention will be explained as follows. As shown in Fig. 9, a transmission 12 according to the second embodiment includes a first clutch mechanism C1, a second clutch mechanism C2, a first input shaft 21, a second input shaft 22, an output shaft 23, a first transmission mechanism 71, a second transmission mechanism 72, a first gear selecting apparatus 81, a second gear selecting apparatus 82, and a controller (control means) 5.

The first clutch mechanism C1 is positioned between an internal combustion output shaft 24 of an internal combustion engine (engine) serving as a power source and the first input shaft 21 to connect or disconnect a transmission of an output torque from the internal combustion engine to the first input shaft 21. A connected state is defined as a state where an output torque from the internal combustion engine is transmitted to the first input shaft 21, and a disconnected state is defined as a state where an output torque from the internal combustion engine is not transmitted to the first input shaft 21.

The second clutch mechanism C2 is positioned between the internal combustion output shaft 24 and the second input shaft 22 to connect or disconnect a transmission of an output torque from the internal combustion engine to the second input shaft 22. A connected state is defined as a state where an output torque from the internal combustion engine is transmitted to the second input shaft 22, and a disconnected state is defined as a state where an output torque from the internal combustion engine is not transmitted to the second input shaft 22.

The first input shaft 21 is connected to the first clutch mechanism C1 to transmit a torque. The second input shaft 22 is connected to the second clutch mechanism C2 to transmit a torque, is arranged coaxially to the first input shaft 21, and is a cylindrical member positioned at an outer periphery of the first input shaft 21.

The output shaft 23 is arranged coaxially to the first and second input shafts 21, 22 and is configured to output an output torque transmitted via the first and second transmission mechanisms 71, 72 or the like to wheels.

The first transmission mechanism 71 includes a first speed gear, a third speed gear, a fifth speed gear, and a seventh speed gear which are provided to transmit a torque between the first input shaft 21 and the output shaft 23, and synchronizing devices 381-384. Each of gear sets includes a transmission gear 711-713 or a driven gear 714 retained at an outer periphery of the first input shaft 21 so as to be relatively rotatable, and a counter gear 62 or a counter shaft drive gear 65 which are fixed to a counter shaft 61 arranged in parallel to the first input shaft 21 so as to be integrally rotatable and corresponding to each gear 711-714. A torque transmitted from the internal combustion engine is transmitted from the counter shaft side drive gear 65 coaxially arranged to the counter gear 62 to the driven gear 714 which is secured to the output shaft 23 so as to be integrally rotatable. According to the transmission 12 of the second embodiment, at the fifth shift stage, the first input shaft 21 and the output shaft 23 are directly connected without intervening the counter gear 62. The first shift stage is established by a gear 711, the third shift stage is established by a gear 712, and the seventh shift stage is established by a gear 713. The gear 711, the gear 713, the gear 712, and the driven gear 714 are arranged in the mentioned order from the first clutch mechanism C1 side to the output shaft 23 side. The synchronizing devices 381-384 are positioned between the corresponding gears 711-714 and corresponding sleeves 414, 415, respectively, to synchronize a rotation of the gears 711-714 which rotate relative to the first input shaft 21 and a rotation of the sleeves 414, 415 which integrally rotates with the first input shaft 21. The synchronizing device 381 is configured to establish a first speed, the synchronizing device 382 is configured to establish a seventh speed, the synchronizing device 383 is configured to establish a third speed, and the synchronizing device 384 is configured to establish a fifth speed.

The second transmission mechanism 72 includes a second speed gear, a fourth speed gear, a sixth speed gear, and a reverse gear which are provided to transmit a torque between the second input shaft 22 and the output shaft 23, and synchronizing devices 391-394. Each of gear sets includes a transmission gear 721-724 retained at an outer periphery of the second input shaft 22 so as to be relatively rotatable, and a counter gear 62 fixed to the counter shaft 61 corresponding to each gear 721-724 so as to be integrally rotatable. A torque transmitted from the internal combustion engine is transmitted to the driven gear 714 which is secured to the output shaft 23 to be integrally rotatable via the counter shaft side drive gear 65 arranged coaxially to the counter gear 62. A second shift stage is established by the gear 721, a fourth shift stage is established by the gear 722, a sixth shift stage is established by the gear 723, and a reverse stage is established by the gear 724. The gear 722, the gear 723, the gear 721, and the reverse gear 724 are arranged in the mentioned order from the second clutch mechanism C2 side to the output shaft 23 side. The synchronizing device 391-394 is positioned between the corresponding gear 721-724 and corresponding sleeve 416, 417, respectively, to synchronize a rotation of the gears 721-724 which rotate relative to the second input shaft 22 and a rotation of the sleeves 416, 417 which integrally rotates with the second input shaft 22. The synchronizing device 391 is configured to establish the fourth shift stage, the synchronizing device 392 is configured to establish the sixth shift stage, the synchronizing device 393 is configured to establish the second shift stage, and the synchronizing device 394 is configured to establish the reverse stage.

A gear set establishing the reverse stage includes an idler gear 63 provided between the gear 724 and the counter gear 62. The idler gear 63 is retained at an idler gear shaft 64 to be rotatable and movable in the axial direction. The idler gear shaft 64 is arranged in parallel to the first input shaft 21, the second input shaft 22, and the counter shaft 61 so as not to rotate. When the reverse gear 724 is selected, the idler gear 63 moves to engage with both of the gear 724 and the counter gear 62 to transmit the rotation of the second input shaft 22 to the reverse gear 724, the idler gear 63 rotates, and thus the counter gear 62 rotates to rotate the counter shaft 61.

The first gear selecting apparatus 81 includes the sleeves 414, 415, actuators 424, 425, forks 434, 435, and fork shafts 444, 445. The sleeves 414, 415 each made from a cylindrical member are positioned between two gears and at an outer periphery of the first input shaft 21 so as to be integrally rotatable. According to the second embodiment, the sleeve 414 is provided between the first speed gear 711 and the seventh speed gear 713, and the sleeve 415 is provided between the third speed gear 712 and the driven gear 714. The sleeve 414, 415 is configured to establish a neutral position where the sleeve 414, 415 is not engaged with any gears, an engaged position where the sleeve 414, 415 is engaged with one of the gears, and a synchronized position where the sleeve 414, 415 is frictionally engaged with the corresponding synchronizing device 381-384 between the neutral position and the corresponding gear. The sleeve 414, 415 selectively moves to the neutral position and the engaged position in the axial direction. The actuators 424, 425 are power sources to move the sleeves 414, 415 between the neutral position and the engaged position, respectively via the forks 434, 435 and the fork shafts 444, 445. The forks 434, 435 are positioned at an outer periphery of the sleeves 414, 415, respectively, and are engaged with the respective sleeves 414, 415 so that the sleeves 414, 415 move between two gears (i.e., between the neutral position and the engaged position) while rotating. The fork shafts 444, 445 are integrally engaged with the forks 434, 435, respectively.

The second gear selecting apparatus 82 includes the sleeves 416, 417, actuators 426, 427, forks 436, 437, and fork shafts 446, 447. The sleeves 416, 417 each made from a cylindrical member are positioned between two gears and at an outer periphery of the second input shaft 22 so as to be integrally rotatable. According to the second embodiment, the sleeve 416 is provided between the fourth speed gear 722 and the sixth speed gear 723, and the sleeve 417 is provided between the second speed gear 721 and the reverse gear 724. The sleeve 416, 417 is configured to establish a neutral position where the sleeve 416, 417 is not engaged with any gears, an engaged position where the sleeve 416, 417 is engaged with one of the gears, and a synchronized position where the sleeve 416, 417 is frictionally engaged with the corresponding synchronizing device 391-394 between the neutral position and the corresponding gear. The sleeve 416, 417 selectively moves to the neutral position and the engaged position in the axial direction. The actuators 426, 427 are power sources to move the sleeves 416, 417 between the neutral position and the engaged position, respectively via the forks 436, 437 and the fork shafts 446, 447. The forks 436, 437 are positioned at an outer periphery of the sleeves 416, 417, respectively, and are engaged with the respective sleeves 416, 417 so that the sleeves 416, 417 move between two gears (i.e., between the neutral position and the engaged position) while rotating. The fork shafts 446, 447 are integrally engaged with the forks 436, 437, respectively.

The controller 5 according to the second embodiment includes constructions and advantages similar to the first embodiment. Constructions of the controller 5 of the second embodiment which differ from the controller 5 of the first embodiment will be explained hereinafter.

The controller 5 according to the second embodiment includes a synchronizing means (synchronizing device) 51, an auxiliary synchronizing means 55 (synchronization device for auxiliary gear), a rotation speed detection device (rotation speed detection device) 53, and an auxiliary gear selecting means (auxiliary gear selecting device) 56. Because the transmission 12 includes the clutch mechanismes C1, C2, control methods of the auxiliary synchronizing means 55 and the auxiliary gear selecting means 56 are different from the correspondence of those in the first embodiment.

The synchronization means 55 controls the corresponding actuator in order to move the sleeve which corresponds to an auxiliary gear provided at one of the input shaft corresponding to a gear selected for the next shift stage to the synchronized position. With the construction of the transmission 12 having two input shafts, synchronizing devices are provided particularly corresponding to the respective input shafts. Accordingly, the auxiliary gear is selected from one of gears corresponding to the synchronizing device which is arranged on the same input shaft to the gear selected for the next shift stage, and the gear which can be synchronized by the sleeve different from the sleeve applied to synchronize the gear selected for the next shift stage. For example, in a case where the third speed gear is selected as the gear selected for the next shift stage, considering that the third speed gear 712 is provided in the first transmission mechanism 71 provided at the first input shaft 21, one of the first speed gear, the fifth speed gear, and the seventh speed gear of the first transmission 71 is deemed to be possibly selected as the auxiliary gear. Further, because the sleeve 415 is provided corresponding to the third speed gear 712, the fifth speed gear 714 which is also provided corresponding to the sleeve 415 is excluded from the possible selection as the auxiliary gear. Accordingly, either the first speed gear 711 or the seventh speed gear 713 is selected as the auxiliary gear, and the actuator 424 is controlled to move the sleeve 414 to the synchronized position.

The auxiliary gear selecting means 56 compares a rotation speed of the gear selected for the next shift stage and a rotation speed of the first input shaft 21 or the second input shaft 22. In a case where the rotation speed of the input shaft is less than the rotation speed of the gear selected for the next shift stage (i.e., next selected gear), the gear which satisfies the following conditions is selected as an auxiliary gear: being provided corresponding to the transmission mechanism corresponding to the transmission mechanism for the next selected gear; being provided corresponding to the sleeve which is different from the sleeve corresponding to the next selected gear; and having a greater gear ratio than a gear ratio of the next selected gear. On the other hand, in a case where the rotation speed of the input shaft is greater than the rotation speed of the gear selected for the next shift stage, the gear which satisfies the following conditions is selected as an auxiliary gear: being provided corresponding to the transmission mechanism corresponding to the transmission mechanism for the next selected gear; being provided corresponding to the sleeve which is different from the sleeve corresponding to the next selected gear; and having a smaller gear ratio than a gear ratio of the next selected gear.

The rotation speed of the first and second input shafts 21, 22 are obtained by a sensor 531 and a sensor 532 of the rotation speed detection device 53, respectively. The sensor 531 detects the rotation speed of the first input shaft 21 and the sensor 532 detects the rotation speed of the second input shaft 22.

According to the second embodiment, the transmission 12 is controlled by the controller (control means) 5 on the basis of the control method of the transmission as shown in Figs. 2-4. Flowcharts shown in Figs. 2-4, in parenthesis show an example of logic for a control method. The control method for controlling the transmission 12 is not limited to the shown example.

The control means 5 detects a rotation speed of the first and second input shafts 21, 22 by means of the rotation speed detection device 53 (rotation speed detecting step S210). Next, the auxiliary gear-selecting means 56 compares a rotation speed of a gear selected for the next shift stage (i.e., next selected gear) and a rotation speed of the first and second input shafts 21, 22 detected at the rotation speed detecting step S210, and selects an auxiliary gear on the basis of compared results (auxiliary gear-selecting step S220).

At the auxiliary gear-selecting step S220, the rotation speed of the gear selected for the next shift stage and rotation speed of one of the first and second input shafts 21, 22 are compared (rotation speed comparing step S221). Thereafter, in a case where the rotation speed of the first input shaft 21 or the second input shaft 22 is less than the rotation speed of the gear selected for the next shift stage, a gear whose gear ratio is greater than a gear ratio of the gear selected for the next shift stage is selected as an auxiliary gear (Step 222 where a gear ratio for an auxiliary gear is greater). On the other hand, in a case where the rotation speed of the first input shaft 21 or the second input shaft 22 is greater than the rotation speed of the gear selected for the next shift stage, a gear whose gear ratio is less than a gear ratio of the gear selected for the next shift stage is selected as an auxiliary gear (Step 223 where a gear ratio for an auxiliary gear is smaller).

Then, the synchronizing means 51 selects the sleeve 414-416 corresponding to the next shift stage (the gear selected for the next shift stage), controls the actuator 424-426 corresponding to the selected sleeve 414-416, and moves the selected sleeve 414-416 to a synchronized position of the gear selected for the next shift stage (synchronization step S230). In the meantime, simultaneous to the transaction of synchronization step S230, the auxiliary synchronizing means 55 controls the corresponding actuator 424-426 to move the sleeve 414-416 corresponding to the selected auxiliary gear to a synchronized position (auxiliary synchronization step S240). At the auxiliary synchronization step S240, the corresponding actuator 424-426 is controlled to move the sleeve 414-416 corresponding to the selected auxiliary gear to the synchronized position (auxiliary gear synchronization step S241), and detects the rotation speed of first input shaft 21 or the second input shaft 22 by means of the rotation speed detection device 53 after a predetermined time elapses (rotation speed detecting step S242). Then, the rotation speed of the gear selected for the next shift stage and the rotation speed of one of the first input shaft 21 and the second input shaft 22 are compared (rotation speed comparing step S243). In a case where the rotation speed of the first input shaft 21 or the second input shaft 22 is not equal to the rotation speed of the gear selected for the next shift stage, the transactions returns to S241 to continue the transaction from auxiliary gear synchronization step S241. In a case where rotation speed of the input shaft 20 is assumed to be equal to the rotation speed of the gear selected for the next shift stage, the corresponding actuator 424-426 is controlled to move the sleeve 414-416 corresponding to the auxiliary gear from the synchronized position to a neutral position (step S244 for ending auxiliary synchronization). In the foregoing explanations, at rotation speed comparing step S243, the rotation speed of the gear selected for the next shift stage and the rotation speed of the first input shaft 21 or the second input shaft 22 are compared, and the synchronization of the auxiliary gear is ended in a case where the rotation speed of the gear selected for the next shift stage and the rotation speed of the first input shaft 21 or the second input shaft 22 are equal. However, the synchronization of the auxiliary gear may be ended in a case where the rotation speed of the first input shaft 21 or the second input shaft 22 is assumed to be a rotation speed close to the rotation speed of the gear selected for the next shift stage. In other words, a predetermined range may be set to rotation speed of a gear selected for the next shift stage to determine whether the rotation speed of the gear selected for the next shift stage and the rotation speed of the first input shaft 21 or the second input shaft 22 are equal.

A method for controlling the transmission 12 of the second embodiment will be explained, hereinafter, referring to a case where the shift stage is changed to the fourth speed when driving in the third speed and a case where the shift stage is changed to the third speed when driving in the fourth speed.

A case where a gear is shifted from a third shift stage to a fourth shift stage will be explained as follows. First, rotation speed of the input shafts 21, 22 is detected at rotation speed detecting step S210. Next, at auxiliary gear-selecting step S220, rotation speed Rin of the second input shaft 22 and rotation speed R4 of the fourth speed gear serving as a gear selected for the next shift stage in this case are compared. In those circumstances, the third speed gear is provided on the first input shaft 21. Provided that the second input shaft 22 has been rotated with the second speed gear provided on the second input shaft 22 before the gear is shifted to the third speed gear, taking the advantageous shifting speed of a dual clutch mechanism into consideration, it is deemed that a selection of the fourth speed is prepared right after the second input shaft 22 is disengaged from the second speed gear. Thus, in a case where a gear is shifted from the second speed gear to the third speed gear and further to the fourth speed gear swiftly, the rotation speed Rin of the second input shaft 22 is assumed to be greater than the rotation speed R4 of the fourth speed gear. In those circumstances, because the rotation speed Rin of the second input shaft 22 is greater than the rotation speed R4 of the fourth speed gear when comparing the rotation speed Rin to the rotation speed R4, Step S223 for selecting auxiliary gear having smaller gear ratio is executed. At S223 for selecting auxiliary gear having smaller gear ratio, the reverse gear 724, which is provided corresponding to the second transmission mechanism 82 corresponding to the fourth speed gear serving as the next selected gear in this case, is provided corresponding to the sleeve 417 being different from the sleeve 416 provided corresponding to the next selected fourth speed gear, and has a smaller gear ratio than a gear ratio of the next selected fourth speed gear, is selected as an auxiliary gear. Then, at synchronization step S230, the sleeve 416 corresponding to the fourth speed gear is selected, and the corresponding actuator 426 is controlled to move the sleeve 416 to a synchronized position of the fourth speed gear 772. Simultaneous to the transaction of synchronization step S230, auxiliary synchronization step S240 is executed. At auxiliary gear synchronization step S241, the sleeve 417 corresponding to the reverse gear is selected, and the corresponding actuator 427 is controlled to move the sleeve 417 to the synchronized position of the reverse gear 724. Thereafter, after a predetermined time elapses, the rotation speed of the input shaft 21, 22 is detected at rotation speed detecting step S242. In a case where the rotation speed of the second input shaft 22 becomes the rotation speed R4 of the fourth speed gear at rotation speed comparing step S243, step S244 for ending auxiliary synchronization is executed. At step S244 for ending auxiliary synchronization, the auxiliary synchronizing means 55 controls the actuator 427 to move the sleeve 417 corresponding to the reverse gear 724 from the synchronization position to a neutral position. In a case where the rotation speed of the second input shaft 22 detected at rotation speed detecting step S242 has not reached the rotation speed of the gear selected for the next shift stage (e.g., the fourth gear speed), the transaction returns to S241 to continue from auxiliary gear synchronization step S241 until the rotation speed of the second input shaft 22 reaches the rotation speed of the gear selected for the next shift stage.

Fig. 10 shows a timing diagram explaining a relationship between rotation speed of the second input shaft 22, a shift stroke of an auxiliary gear (e.g., reverse gear), and a shift stroke of a gear selected for the next shift stage (e.g., fourth speed gear). The shift strokes of the gears are illustrated so as to correspond to the position of the sleeves 416, 417. As shown in Fig. 10, synchronization step S230 and auxiliary synchronization step S240 are executed at time T1, and the synchronization of the auxiliary gear is ended at step S244 for ending auxiliary synchronization because the rotation speed of the second input shaft 22 reaches the rotation speed R4 of the fourth speed gear at time T2.

A case where a gear is shifted from the fourth shift stage to the third shift stage will be explained as follows. First, a rotation speed of the input shafts 21, 22 is detected at rotation speed detecting step S210. Next, at auxiliary gear-selecting step S220, rotation speed Rin of the first input shaft 21 and rotation speed R3 of the third speed gear serving as a gear selected for the next shift stage in this case are compared. In those circumstances, the fourth speed gear is provided on the second input shaft 22. Provided that the first input shaft 21 has been rotated with the fifth speed gear provided on the first input shaft 21 immediately before the gear is shifted to the fourth speed gear, taking the advantageous shifting speed of a dual clutch mechanism into consideration, it is deemed that a selection of the third speed is prepared right after the first input shaft 21 is disengaged from the fifth speed gear. Thus, in a case where a gear is shifted from the fifth speed gear to the fourth speed gear and further to the third speed gear swiftly, the rotation speed Rin of the first input shaft 21 is assumed to be less than the rotation speed R3 of the third speed gear. In those circumstances, because the rotation speed Rin of the first input shaft 21 is less than the rotation speed R3 of the third speed gear when comparing the rotation speed Rin to the rotation speed R3, Step S222 for selecting auxiliary gear having greater gear ratio is executed. At S222 for selecting auxiliary gear having greater gear ratio, the first speed gear 711, which is provided corresponding to the first transmission mechanism 81 corresponding to the third speed gear serving as the next selected gear in this case, is provided corresponding to the sleeve 414 being different from the sleeve 415 provided corresponding to the next selected third speed gear, and has a greater gear ratio than a gear ratio of the next selected third speed gear, is selected as an auxiliary gear. Then, at synchronization step S230, the sleeve 415 corresponding to the third speed gear is selected, and the corresponding actuator 425 is controlled to move the sleeve 415 to a synchronized position of the third speed gear 712. Simultaneous to the transaction of synchronization step S230, auxiliary synchronization step S240 is executed. At auxiliary gear synchronization step S241, the sleeve 414 corresponding to the first speed gear is selected, and the corresponding actuator 424 is controlled to move the sleeve 414 to the synchronized position of the first speed gear 711. Thereafter, after a predetermined time elapses, the rotation speed of the input shafts 21, 22 is detected at rotation speed detecting step S242. In a case where the rotation speed of the first input shaft 21 becomes the rotation speed R3 of the third speed gear at rotation speed comparing step S243, step S244 for ending auxiliary synchronization is executed. At step S244 for ending auxiliary synchronization, the auxiliary synchronizing means 55 controls the actuator 425 to move the sleeve 415 corresponding to the first speed gear 711 from the synchronization position to a neutral position. In a case where the rotation speed of the first input shaft 21 detected at rotation speed detecting step S242 has not reached the rotation speed of the gear selected for the next shift stage (e.g., the third gear speed), the transaction returns to S241 to continue from auxiliary gear synchronization step S241 until the rotation speed of the first input shaft 21 reaches the rotation speed of the gear selected for the next shift stage.

Fig. 11 shows a timing diagram explaining a relationship between rotation speed of the first input shaft 21, a shift stroke of an auxiliary gear (e.g., first speed gear), and a shift stroke of a gear selected for the next shift stage (e.g., third speed gear). As shown in Fig. 11, synchronization step S230 and auxiliary synchronization step S240 are executed at time T1, and the synchronization of the auxiliary gear is ended at step S244 for ending auxiliary synchronization because the rotation speed of the first input shaft 21 reaches the rotation speed R3 of the third speed gear at time T2.

According to a layout of gear sets of the transmission 12 of the second embodiment, the control method for the transmission 12 is applied when shifting stages from the first speed to the second, the third, the fourth, and the fifth speed, from the second speed to the third, the fourth and the fifth speed, from the third speed to the fourth and the fifth speed, from the fourth speed to the third and the fifth speed, from the fifth to the third and the fourth speed, from the sixth speed to the third, the fourth, and the fifth speed, from the seventh speed to the third, the fourth, the fifth and the sixth speed. In other words, synchronization may be assisted, or supported by another gear when the gear is shifted to the second speed gear, the third speed gear, the fourth speed gear, the fifth speed gear, and the sixth speed gear (i.e., a synchronization is not assisted by another gear when the gear is shifted to the first speed gear and the seventh speed gear). Accordingly, synchronization capacities of each of the synchronizing devices 383, 392, 384 corresponding to the third speed gear, the fourth speed gear, and the fifth speed gear, respectively, can be reduced (downsized). By reducing the synchronization capacity, a manufacturing cost of the synchronizing device is reduced and the transmission 12 per se can be downsized.

With the construction of the transmission 12 and the control method for the transmission according to the second embodiment, in addition to the synchronizing means 51 (synchronization step S230) for selecting the sleeve 414-417 corresponding to the selected gear and synchronizing the sleeve 414-417 to the selected gear, the auxiliary synchronizing means 55 (auxiliary synchronization step S240) for controlling the actuator 424-427 to move the sleeve 414-417 corresponding to the auxiliary gear to the synchronized position is provided. According to the foregoing construction, not only the synchronization by a synchronizing device corresponding to the selected gear, but also the synchronization by a synchronizing device corresponding another gear is performed, and thus the synchronization of the rotation speed of the input shaft 21, 22 is assisted, or supported by the synchronization of another gear in addition to the selected gear. Namely, the rotation speed of the input shaft 21, 22 is synchronized to a gear selected for the next shift stage more swiftly, and a synchronization time is reduced. In consequence, a time required for changing gears is reduced, and an operational feeling is enhanced. Further, because the synchronization capacity of the transmission as a whole can be increased by applying another synchronizing device 381-384, 391-394 in addition to the synchronizing device 381-384, 391-394 corresponding to the selected gear, the synchronization capacity of each of the synchronizing devices can be reduced (each of the synchronizing devices can be downsized to have reduced synchronization capacity).

Further, according to the second embodiment, because the rotation speed detection device 53 (rotation speed detecting step S242) detecting the rotation speed of the first and second input shafts 21, 22 is provided and the sleeve 414-417 is moved to the neutral position so as not to synchronize by the auxiliary synchronizing means 55 in a case where the rotation speed of the input shafts 21, 22 detected by the rotation speed detection device 53 conforms to the rotation speed of the selected gear, rotation speed of the input shaft can be synchronized to the rotation speed of the selected gear more accurately and more swiftly (step S244 for ending auxiliary synchronization), and the time for changing gears is reduced.

Still further, according to the second embodiment, because an auxiliary gear is determined by comparing the rotation speed of the first and second input shafts 21, 22 and the rotation speed of a selected gear by the auxiliary gear selecting means 56 (auxiliary gear-selecting step S220), the rotation speed of the first and second input shafts 21, 22 can be more securely synchronized and the time for changing gears can be reduced.

In addition to the foregoing advantages, in a case where one of the synchronizing devices is damaged, synchronization for gear shifting can be performed using another synchronizing device so that a vehicle can travel to a repair shop.

A first modified example of the second embodiment will be explained hereinafter. Particular features of the first modified example of the second embodiment will be explained, and the explanations for the features common to the second embodiment will not be repeated. Likewise the constructions and the control methods of the transmission 11 according to the second and third modified examples of the first embodiment, according to the transmission 12 of the first modified example of the second embodiment, when the gear is shifted to any gear shift stages including the first speed and the seventh speed, another gear other than, or different from the selected gear for the next shift stage is selected as an auxiliary gear temporarily, and the synchronization is assisted, or supported by the synchronizing device provided corresponding to the auxiliary gear. The synchronization by means of the synchronizing device provided corresponding to the auxiliary gear is ended at an earlier timing than the completion of the synchronization by means of the synchronizing device provided corresponding to the gear selected for the next shift stage. According to the foregoing construction and the control method, a time required for the synchronization is shortened and thus a time for changing gears can be reduced.

Other variations of the embodiments will be explained as follows. The embodiment of the present invention is not limited to the above-explained embodiments, and can be varied. For example, although the rotation speed of the input shaft is detected by the sensor (rotation speed detection device) mounted to the input shaft in the foregoing embodiments, rotation speed of the internal combustion engine which is visibly indicated on a console may be applied. In this case, the rotation speed of the internal combustion engine immediately after the clutch mechanism C is disconnected in order to shift gears is applied as the rotation speed of the input shaft. In those circumstances, at rotation speed detecting step S242 of auxiliary synchronization step S240, instead of detecting the rotation speed of the input shaft by the sensor, the rotation speed of the input shaft after an elapse of a predetermined time may be pre-estimated or step S244 for ending auxiliary synchronization may be executed after a predetermined time elapses.

A second modified example of the second embodiment will be explained as follows. Particular features of the second modified of the second embodiment example will be explained, and the explanations for the features common to the second embodiment will not be repeated. A transmission according to the second modified example of the second embodiment corresponds to the transmission 12 of the second embodiment which does not include the synchronizing device 394 provided corresponding to the reverse gear. In those circumstances, because the synchronizing device 394 provided corresponding to the reverse gear is not provided in the second transmission mechanism 72, the positions of the sixth speed gear and the reverse gear are switched in a layout arrangement. The fourth speed gear, the reverse gear, the sixth speed gear, and the second speed gear are arranged in the mentioned order from the second clutch mechanism C2 side to the output shaft 23 side. According to the transmission of the second modified example of the second embodiment, because the synchronizing device 394 corresponding to the reverse gear is not provided, a manufacturing cost can be reduced.

## Claims

1. A transmission (11, 12), comprising:
a clutch mechanism (C, C1, C2) moving to switch between a connected state where the clutch mechanism is connected to a power source and a disconnected state where the clutch mechanism is disconnected from the power source;
an input shaft (20, 21, 22) connected to the clutch mechanism (C, C1, C2);
an output shaft (23);
a transmission mechanism (3, 71, 72) including a plurality of gears (31-33, 35, 36, 711-714,721-724) provided between the input shaft (20, 21, 22) and the output shaft (23), the transmission mechanism (3, 71, 72) including a synchronizing device (371-375, 381-384, 391-394) selectively synchronizing a rotation speed of the input shaft (20, 21, 22) and a rotation speed of the gears(31-33, 35, 36, 711-714,721-724);
a gear selecting apparatus (4, 81, 82) including a plurality of sleeves (411-413, 414-417) respectively positioned between the corresponding gears (31-33, 35, 36, 711-714,721-724) and at least one actuator (421-427) for actuating the sleeves, the sleeve (411-413, 414-417) selectively moving to a neutral position where the sleeve is not engaged with any of the gears (31-33, 35, 36, 711-714,721-724), to an engaged position where the sleeve is engaged with a gear selected among the gears, and to a synchronized position where the gear and the input shaft are synchronized by the synchronizing device between the neutral position and the engaged position, the actuator (421-427) actuating the sleeve to selectively move to the neutral position and to the engaged position;
a control means (5) controlling the clutch mechanism and the actuator;
a synchronizing means (51) provided at the control means for controlling the actuator to select the sleeve corresponding to the selected gear and to move the sleeve to the synchronized position so that the input shaft and the selected gear are synchronized by the synchronizing device; and
an auxiliary synchronizing means (52, 55) provided at the control means for controlling the corresponding actuator to move the sleeve corresponding to an auxiliary gear (31-33, 35, 36, 711-714,721-724) which is the gear different from the selected gear to the synchronized position.

2. The transmission according to claim 1, wherein the control means (5) includes a rotation speed detection device (53) detecting the rotation speed of the input shaft, and the auxiliary synchronizing means (52, 55) controls the actuator (421-427) to move the sleeve (411-413, 414-417) to the neutral position when a rotation speed of the input shaft (20, 21, 22) detected by the rotation speed detection device (53) synchronizes a rotation speed of the selected gear (31-33, 35, 36, 711-714,721-724).

3. The transmission according either one of claims 1 or 2, wherein the clutch mechanism includes a first clutch mechanism (C1) and a second clutch mechanism (C2);
the input shaft includes a first input shaft (21) connected to the first clutch mechanism and a second input shaft (22) connected to the second clutch mechanism; and wherein
the auxiliary synchronizing means (55) controls the actuator to move the sleeve (414-417), which is provided corresponding to the auxiliary gear provided at one of the first input shaft and the second input shaft to which the selected gear is provided, to the synchronized position.

4. The transmission according to any one of claims 1-3, wherein the control means comprises an auxiliary gear selecting means (56) which compares a rotation speed of the selected gear (31-33, 35, 36, 711-714,721-724) and the rotation speed of the input shaft (20, 21, 22), selects the gear having a greater gear ratio than a gear ratio of the selected gear as the auxiliary gear in a case where the rotation speed of the input shaft is less than the rotation speed of the selected gear, and selects the gear having a less gear ratio than a gear ratio of the selected gear as the auxiliary gear in a case where the rotation speed of the input shaft is greater than the rotation speed of the selected gear.

5. A control method for controlling a transmission comprising:
a clutch mechanism (C, C1, C2) moving to switch between a connected state where the clutch mechanism is connected to a power source and a disconnected state where the clutch mechanism is disconnected from the power source;
an input shaft (20, 21, 22) connected to the clutch mechanism (C, C1, C2);
an output shaft (23);
a transmission mechanism (3, 71, 72) including a plurality of gears (31-33, 35, 36, 711-714,721-724) provided between the input shaft (20, 21, 22) and the output shaft (23), the transmission mechanism (3, 71, 72) including a synchronizing device (371-375, 381-384, 391-394) selectively synchronizing a rotation speed of the input shaft (20, 21, 22) and a rotation speed of the gears(31-33, 35, 36, 711-714,721-724);
a gear selecting apparatus (4, 81, 82) including a plurality of sleeves (411-413, 414-417) respectively positioned between the corresponding gears (31-33, 35, 36, 711-714,721-724) and at least one actuator (421-427) for actuating the sleeves, the sleeve (411-413, 414-417) selectively moving to a neutral position where the sleeve is not engaged with any of the gears (31-33, 35, 36, 711.-714,721-724), to an engaged position where the sleeve is engaged with a gear selected among the gears, and to a synchronized position where the gear and the input shaft are synchronized by the synchronizing device between the neutral position and the engaged position, the actuator (421-427) actuating the sleeve to selectively move to the neutral position and to the engaged position;
a control means (5) controlling the clutch mechanism and the actuator;
the control method comprising:
selecting the sleeve provided corresponding to the selected gear and controlling the actuator to move the selected sleeve to the synchronized position so that the input shaft and the selected gear are synchronized by the synchronizing device; and
controlling the corresponding actuator so that the sleeve provided corresponding to an auxiliary gear (31-33, 35, 36, 711-714,721-724) which is the gear different from the selected gear is moved to the synchronized position to perform an auxiliary synchronization by the synchronizing device corresponding to the auxiliary gear.

6. The control method for the transmission according to claim 5, further comprising:
detecting the rotation speed of the input shaft; and
controlling the actuator to move the sleeve corresponding to the auxiliary gear from the synchronized position to the neutral position in a case where the detected rotation speed of the input shaft synchronizes the rotation speed of the selected gear.

7. The control method for the transmission according to either one of claim 5 or 6, wherein the clutch mechanism includes a first clutch mechanism (C1) and a second clutch mechanism (C2), the input shaft includes a first input shaft (21) connected to the first clutch mechanism and a second input shaft (22) connected to the second clutch mechanism, and the control method controlling the corresponding actuator to move the sleeve, which is provided corresponding to the auxiliary gear provided on one of the first input shaft and the second input shaft to which the selected gear is provided, to the synchronized position to perform the auxiliary synchronization.

8. The control method for the transmission according to any one of claims 5-7, further comprising: comparing a rotation speed of the selected gear and a rotation speed of the input shaft, selecting the gear having a greater gear ratio than a gear ratio of the selected gear as the auxiliary gear in a case where the rotation speed of the input shaft is less than the rotation speed of the selected gear, and selecting the gear having a less gear ratio than a gear ratio of the selected gear as the auxiliary gear in a case where the rotation speed of the input shaft is greater than the rotation speed of the selected gear.
